# EUROPEAN PATENT SPECIFICATION

(11) **EP 4 448 956 B1**
(45) Date of publication and mention of the grant of the patent: **10.12.2025**
(21) Application number: 23701525.0
(22) Date of filing: 24.01.2023
(51) Int. Cl.: F03D 80/30, H02G 13/00

(54) **LIGHTNING RECEPTOR ASSEMBLY**
BLITZAUFNAHMEANORDNUNG
ENSEMBLE RÉCEPTEUR DE FOUDRE

(30) Priority: 14.02.2022 EP 22156486
(43) Date of publication of application: 23.10.2024
(73) Proprietor: Siemens Gamesa Renewable Energy A/S, 7330 Brande (DK)
(72) Inventor: NAUHEIMER, Michael, 9000 Aalborg (DK); PONNADA, Sri Markandeya Rajesh, Boucherville, J4B 2W9 (CA)
(74) Representative: SGRE-Association
(86) International application number: PCT/EP2023/051643
(87) International publication number: WO 2023/151938

(56) References cited:
- EP-A1- 2 518 312
- EP-A1- 2 944 809
- EP-A1- 3 879 091
- DE-A1- 102015 115 190

## Description

### Background

The rotor blades of a wind turbine are the most exposed parts and can receive many lightning strikes every year. It is therefore necessary to provide a lightning protection system (LPS) that reliably guides the very high lightning currents to ground. An air-termination of a down-conductor of a wind turbine rotor blade LPS is generally realized as a receptor located at the rotor blade outer surface, usually in the more outboard end or "tip region". The purpose of a receptor is to deliberately attract a lightning strike in order to decrease the likelihood that lightning will strike elsewhere on the rotor blade itself. A lightning strike is understood to result when an upward-reaching leader succeeds in joining a downward-reaching leader of opposite electrical charge.

This type of rotor blade receptor is electrically connected to a relatively large metal block or "receptor base" arranged in the rotor blade interior. This can be done by a threaded metal fastener extending from the receptor into the receptor base, with a washer between the receptor and the base. The receptor base in turn is electrically connected to the down-conductor in the interior of the rotor blade. The down-conductor generally extends into the hub. By means of further lightning conductors and suitable interfaces between hub and nacelle and between nacelle and tower, lightning current is given an uninterrupted safe path to ground.

The receptor itself is usually somewhat higher than the rotor blade surface, making it efficient at attracting lightning strikes, because it is easier for electrical charge to build up on a raised metal body than on the flat surface of the rotor blade. That type of receptor assembly is suitable for rotor blades that are constructed primarily from fibreglass. However, in order to reduce the weight of a long rotor blade while fulfilling its structural strength requirements, the use of carbon reinforcing elements is becoming more widespread. A carbon-fibre-reinforced polymer (CFRP) component such as a spar cap can be embedded in the body of the rotor blade instead of a spar cap made of glass-fibre-reinforced polymer (GFRP), for example, and can extend over the length of the rotor blade into the tip region. However, since carbon is electrically conductive, electrical charge may build up on a CFRP component during a storm. Since a spar cap is quite close to the surface of a rotor blade, the presence of a CFRP component close to the blade tip may result in lightning interception during a thunderstorm, possibly leading to severe damage of the rotor blade and the need to shut down the wind turbine. The costs of repair and loss of revenue may be considerable. Therefore, it has been proposed to increase the area of attraction for a lightning strike by arranging an electrically conductive band about the outside of the rotor blade and connecting the band to the receptor assembly. The band can be realised as a strip of metal, a metal mesh, a metal braid, etc. In a known approach, a hole is formed in the receptor band, and the threaded bolt of the receptor assembly is passed through the hole to clamp the receptor band firmly between the raised receptor at the outside and the receptor block in the rotor blade interior. This is a relatively straightforward procedure when carried out during the manufacturing stage of a rotor blade. However, the air-termination of a rotor blade LPS is a wear part and must be replaced or exchanged at suitably frequent intervals to ensure the reliability of the LPS. Therefore, a receptor band must be exchanged at suitably frequent intervals. The known designs require the receptor to be detached first in order to remove an old receptor band, and the receptor must then be re-attached after arranging a replacement receptor band about the rotor blade. The handling of relatively small parts such as threaded bolts, washers etc., can be very difficult for a technician suspended from a harness in order to reach the tip end of a long rotor blade. The risk of dropping and losing a part is considerable. A part dropped from such a great height may result in serious injury to personnel underneath the rotor blade. Additionally, damage to the blade can be expected if the falling components hit its surface. Furthermore, depending on the materials from which the receptor components are made, any lost parts can also be environmental pollutants.

D1 discloses a wind turbine blade comprising a lightning protection system is provided. An elongate receptor band is installed on the external surface of the wind turbine blade, over the lightning receptor module, and the receptor band is arranged to receive a stroke of lightning and transfer electrical current from the lightning stroke to the lightning conductor through the lightning receptor module.

D2 provides enhanced protection against lightning strikes, reduces maintenance costs, and simplifies installation and inspection, while minimizing weight and aerodynamic impact, allowing for longer blade lifetimes and reduced manufacturing complexities. Document EP 2 944 809 A1 discloses a prior art example of a wind turbine lightning receptor.

The object of the invention is to provide a rotor blade LPS receptor assembly that avoids the problems described above.

This object is achieved by the claimed wind turbine according to claim 1 and by the claimed method according to claim 12 of performing a maintenance procedure on a lightning receptor assembly of a wind turbine rotor blade.

### Description

According to the invention, the wind turbine rotor blade lightning receptor assembly comprises a receptor unit comprising a receptor base for installation in the rotor blade interior and a receptor for placement at an outer surface of the rotor blade; a connector to form a mechanical connection between the receptor and the receptor base; and a conductive band adapted to lie on the outer surface of the rotor blade and to form an electrical connection to the receptor unit without requiring removal of the receptor from the receptor base. To this end, the conductive band comprises a cut-out extending inwards from an edge of the conductive band. The cut-out is shaped to laterally receive a shaft of the threaded connector, i.e. the shape of the cut-out allows the conductive band to partially enclose the shaft of the threaded connector. The cut-out can be regarded as a blind passage, open at one end to receive the threaded connector, and closed at the other end. It shall be understood that all components of the lightning receptor assembly are electrically conductive, i.e. the receptor unit, the connector and the receptor base are all made of a metal such as copper or copper alloys, stainless steel, etc. with favourable conductive properties and the ability to repeatedly carry high lightning currents without exhibiting material damage.

Because the conductive band is connected to the receptor and contributes to the functionality of the receptor, it may also be referred to as a receptor band in the following. The conductive band of the lightning receptor assembly serves to increase the surface area of the attractor, and effectively encourages a lightning strike towards the receptor.

The conductive band of the lightning receptor assembly preferably lies on the surface of the rotor blade. This may be achieved by shaping the conductive band to have essentially the same curvature as the rotor blade airfoil. Alternatively, the conductive band may be flexible so that it can conform to the curvature of the rotor blade airfoil.

The conductive band may be partially or completely coated with a protective layer, for example it may be wrapped in a layer of glass-fibre material. The underside of the band may be coated with an adhesive as appropriate to minimize gaps between the band and the rotor blade surface.

The repair or maintenance procedure on a receptor assembly of a wind turbine rotor blade is generally done "in the field" or in situ, i.e. an operator or technician is lowered in a harness from the hub down towards rotor blade tip to reach the receptor assembly. An advantage of the inventive lightning receptor assembly is that it permits a straightforward and safe in situ replacement of the conductive band with minimal risk of parts falling and causing injury or being lost. The inventive lightning receptor assembly therefore makes it easier to ensure that the repair or maintenance procedure fulfils any relevant environmental, health and safety (EHS) regulations.

According to the invention, the wind turbine comprises a number of rotor blades, and wherein a rotor blade is equipped with at least one embodiment of the inventive lightning receptor assembly.

According to the invention, the method of performing a maintenance procedure on a lightning receptor assembly on a rotor blade of such a wind turbine comprises the steps of loosening the connector of a receptor unit while leaving the receptor still attached by the loosened connector to the receptor base; removing the conductive band from under the receptor of that receptor unit; inserting a replacement conductive band under the receptor of that receptor unit; and finally re-tightening the connector of the receptor unit. These method steps apply to a lightning receptor assembly in which a conductive band terminates at the receptor.

Particularly advantageous embodiments and features of the invention are given by the dependent claims, as revealed in the following description. Features of different claim categories may be combined as appropriate to give further embodiments not described herein.

The expressions "receptor base", "base", "receptor block" and "block" are synonyms and may be used interchangeably herein.

As mentioned above, the receptor can be connected to the receptor base by a threaded metal fastener extending from the receptor into the receptor base. The threaded fastener and the receptor can be formed as a single component. The conductive band of the inventive lightning receptor assembly can replace a washer of an existing receptor assembly.

Preferably, the conductive band comprises a suitable conducting metal. For example, the conductive band can be made of copper or a copper alloy. Other suitable materials from which the conductive band may be made can be metal-coated carbon fibre or metal-coated glass fibre, etc. Any metal of the conductive band may be exposed at the surface, or concealed underneath a protective layer.

The cross-sectional area of the conductive band is chosen to be able to conduct the very high lightning currents in the event of a lightning strike. A copper conductive band may have a cross-sectional area in the order of 50 mm², for example. The actual cross-sectional area will depend on various factors such as the choice of material(s), the position of the lightning receptor assembly on the rotor blade, etc., and a conductive band may have dimensions such as a width of 10 mm - 500 mm, a thickness of 0.1 mm - 5 mm, and a length in the order of 250 mm - 5000 mm.

In one possible configuration, a lightning receptor assembly comprises two adjacent receptor units on the same side of a rotor blade, and the conductive band of that lightning receptor assembly extends between those receptor units. In another possible configuration, a lightning receptor assembly comprises a first receptor unit on the pressure side of a rotor blade and a second receptor unit on the suction side, and the conductive band of that lightning receptor assembly extends between those receptor units. In such an embodiment, the conductive band is bent or shaped to fit about the airfoil of the rotor blade, effectively changing direction at the trailing edge or the leading edge. Of course, a rotor blade may be equipped with any combination of lightning receptor assemblies as described above.

A conductive band can be connected to a receptor in a number of ways. In one preferred embodiment of the invention, the conductive band is wedged underneath a lateral "clamping plate" that extends between two receptors. The clamping plate may be installed once, and can be secured to the receptors when these are mounted to the rotor blade. The clamping plate is preferably shaped so that the conductive band, when placed underneath the clamping plate, is pressed against the surface of the rotor blade. The exchange of this type of conductive band is favourably straightforward.

Preferably, the clamping plate comprises a through-hole at each of its two outer ends to receive a threaded connector of each receptor unit. In the case of an lightning receptor assembly in which a clamping plate extends between two adjacent receptor assemblies, the method of performing a maintenance procedure comprises the steps of loosening the connectors of the receptor units while leaving the receptors attached to the respective blocks, removing the conductive band from under the clamping plate; inserting a replacement conductive band under the clamping plate; and then tightening the connectors of the receptor units once again.

In a further preferred embodiment of the invention, the conductive band is installed by inserting it between the receptor and the receptor block, so that, when the threaded connector is tightened, the conductive band is clamped or wedged between the receptor and the block. The conductive band of the inventive lightning receptor assembly is shaped so that it is not necessary to remove the receptor in order to install the conductive band. For example, in a particularly preferred embodiment of the invention, the conductive band comprises a cut-out or slit at an outer end, and the cut-out is shaped to fit about the shaft of a threaded connector between the receptor and the receptor base. In a further preferred embodiment of the invention, a conductive band can have a cut-out half-way along one long edge, again shaped to fit about the shaft of a threaded connector between the receptor and the receptor base.

The threaded connector is then tightened so that the conductive band is press-fit between the upper face of the receptor block and the underside of the receptor. Preferably, the cut-out is shaped so that, when the conductive band is in place, side faces of the cut-out make contact with the connector. In other words, the cut-out is only as big as it needs to be to fit about the threaded shaft. This shape maximizes the surface area between the upper face of the receptor block and the underside of the receptor.

The cut-out can be formed as a straight slit in the body of the clamping plate, for example a U-shaped elongate slit that is wide enough to fit about the shaft of the threaded connector. The conductive band can be manufactured by stamping the desired shape from a sheet of metal. Alternatively, the cut-out can be formed in the conductive band "in the field", i.e. a technician can first measure the distance to be covered by the conductive band and can then, using a suitable tool, form the cut-out. For example, a conductive band can be prepared by punching several round holes at various locations. Each round hole has a diameter large enough to accommodate the threaded connector. During the maintenance step, the technician identifies the most appropriate round hole, and uses a suitable metal cutting tool to cut a slit from the edge of the conductive band to the selected round hole.

In a next step, the technician loosens the connector by an amount corresponding to the thickness of the conductive band, and then inserts the conductive band between receptor and base. Once the conductive band is in place, the threaded connector is tightened once again.

In a further preferred embodiment of the invention, the cut-out is formed as an angled slit in the body of the conductive band. This shape can facilitate a quick and straightforward replacement of the conductive band, since it is easier for a technician to manipulate the conductive band into place, particularly if the other end of that conductive band is already secured to another receptor unit.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 is a schematic representation of a lightning protection system of a wind turbine;
Figure 2 shows a cross-section through an exemplary receptor unit;
Figure 3 shows an exemplary conductive band and a receptor unit of an embodiment of the inventive lightning receptor assembly;
Figure 4 shows the lightning receptor assembly of Figure 3 during a service procedure;
Figure 5 shows an alternative form for the conductive band of an lightning receptor assembly according to the invention;
Figure 6 shows an alternative lightning receptor assembly;
Figure 7 shows a number of possible configurations of the inventive lightning receptor assembly for a wind turbine rotor blade;
Figures 8 and 9 show further alternative forms for the conductive band of an lightning receptor assembly according to the invention;
Figure 10 illustrates a prior art LPS configuration of a rotor blade.

In the diagrams, like numbers refer to like objects throughout. Objects in the diagrams are not necessarily drawn to scale.

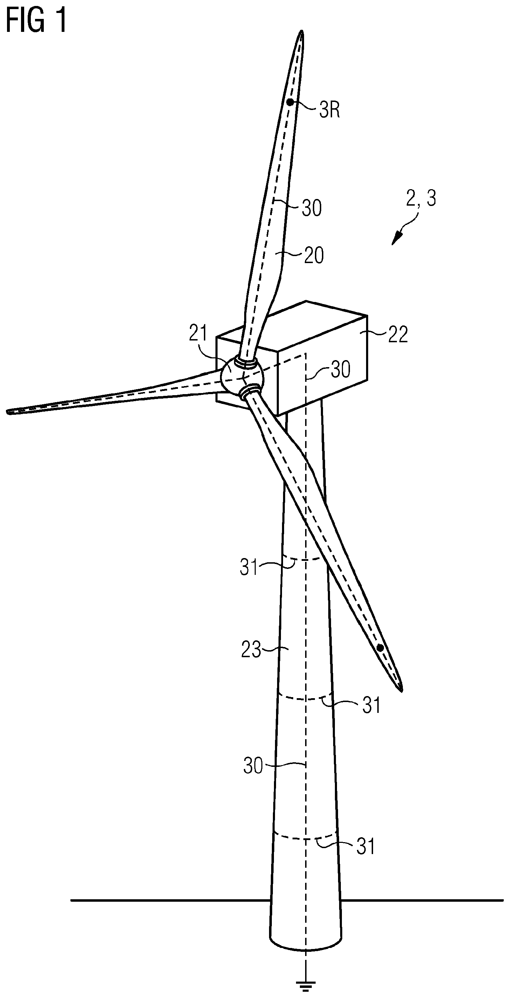

Figure 1 is a schematic representation of a lightning protection system (LPS) 3 of a wind turbine 2. Down conductors 30 of an LPS 3 are arranged throughout the various regions of the wind turbine 2. The drawing shows down-conductors 30 in the rotor blades 20, the hub 21, the nacelle 22, and in the tower 23, which is also provided with equipotential rings 31. The down-conductors 30 are all electrically connected so that a lightning current - from a lightning strike to any region of the wind turbine - will be guided through the shortest path to ground.

Each rotor blade 20 is equipped with a number of receptors 3R which in turn are electrically connected to the down-conductor in the rotor blade interior. Generally, it is advantageous to arrange receptors 3R towards the tip end of a rotor blade 20, since lightning strikes most frequently occur at the outer extremities of a tall structure.

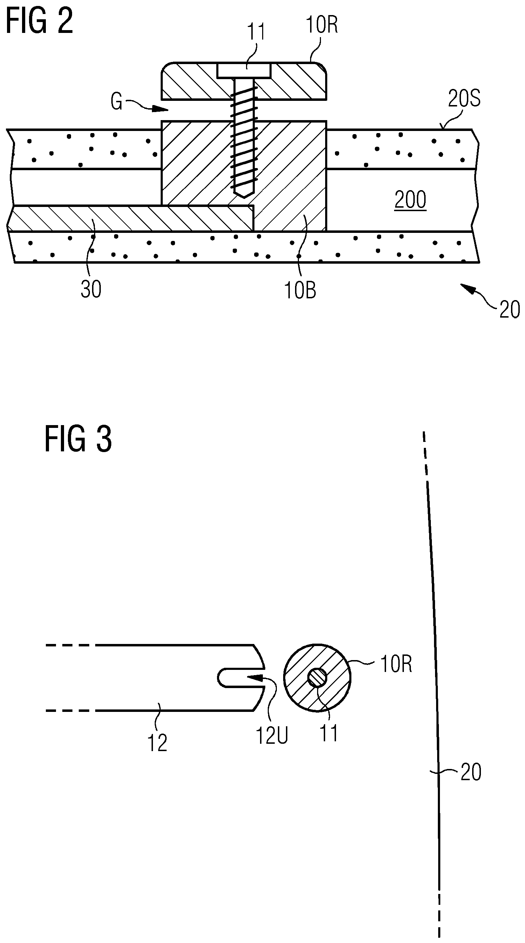

Figure 2 shows a cross-section through an exemplary receptor unit 10R, 10B, with a receptor block 10B arranged inside the rotor blade 20 and electrically connected to the down-conductor 30 in the rotor blade interior 200. A receptor 10R (functionally the same as the receptor 3R of Figure 1) at the outside protrudes at least partially above the outer surface 20S of the rotor blade 20 and is connected to the base 10B by a threaded connector 11. All parts of the receptor unit 10R, 10B, 11 are made of a conductive metal such as stainless steel or a copper alloy, for example. The diagram shows a slight gap G between the receptor 10R and the base 10B. A component of the inventive lightning receptor assembly 1 will be inserted into this gap G, for example during a maintenance procedure, as will be explained below.

Figure 3 is a plan view onto the surface of a rotor blade 20, showing an exemplary conductive band 12 and a receptor unit of an embodiment of the inventive lightning receptor assembly 1. The diagram shows the receptor 10R at the surface of the rotor blade 20, and the base 10B is concealed inside the interior of the rotor blade 20. An outer end of the conductive band 12 is to be placed into the gap G between receptor 10R and base 10B. The diagram shows that the conductive band 12 has a cut-out 12U in the form of an elongate slit that can accommodate the portion of the shaft 11S of the threaded connector 11 exposed in the gap G between receptor 10R and base 10B shown in Figure 2 above. During assembly, the conductive band 12 can be pushed sideways into the gap between the receptor 10R and base 10B so that the cut-out 12U laterally receives the shaft 11S of the threaded connector 11.

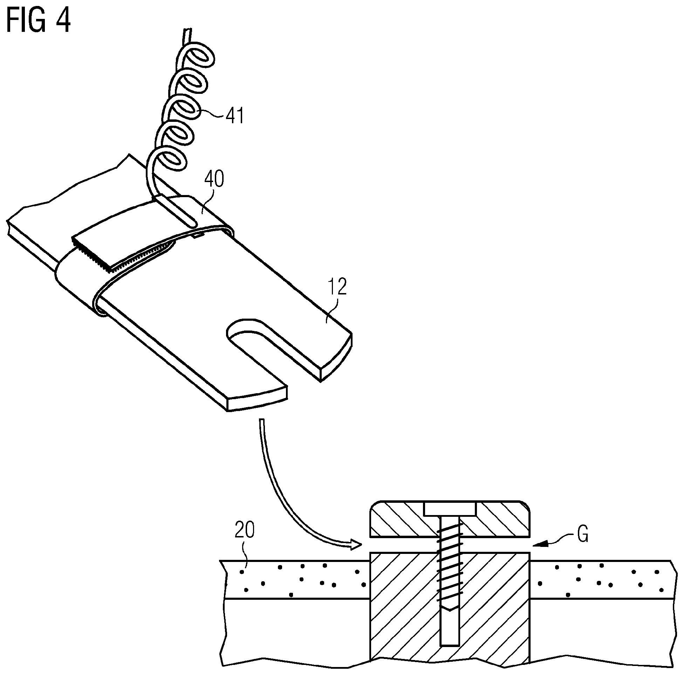

Figure 4 shows the lightning receptor assembly 1 of Figure 3 during a service procedure. A technician 4 need only loosen the threaded connector 11 as shown in Figure 2, without actually removing the receptor 10R. He then inserts one end of the conductive band 12 into the gap G between receptor 10R and base 10B, allowing the cut-out 12U to laterally receive the shaft 11S of the threaded connector 11 so that the shaft 11S of the screw 11 is positioned inside the cut-out 12U, and then tightens the screw 11 once more. The process is repeated - as appropriate - to clamp the other end of the conductive band 12 in a second receptor unit 10R, 10B.

The diagram illustrates another aspect of the invention. Here, a technician (not shown) has attached a temporary holding means 40 to the replacement conductive band 12 prior to its insertion into the receptor unit 10R, 10B. The temporary holding means 40 can be an elastic sleeve wrapped about the conductive band 12 and secured with a hook-and-loop fastener or similar, with a spiral cord 41 or similar for connecting to the technician's belt. The risk of the technician inadvertently dropping the conductive band 12 is therefore minimized. Of course, such a sleeve 40 can be realized in any suitable manner, for example from a rubber material, any non-slip material, a magnetic material, etc. Once the conductive band 12 has been secured, the technician can simply remove the temporary holding means 40, 41 from the conductive band 12.

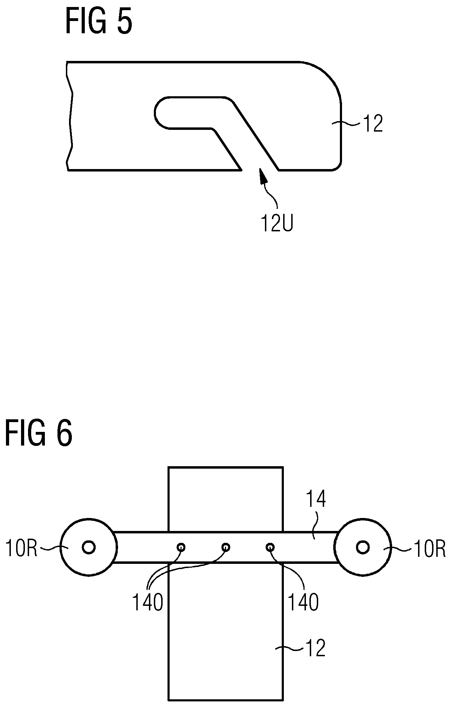

Figure 5 shows an alternative form for the conductive band 12 of an lightning receptor assembly according to the invention. Here, the cut-out 12U is angled, and the shape of the cut-out 12U allows the conductive band 12 to be hooked to a loosely fixed receptor 10R, thereby simplifying the replacement procedure.

Figure 6 shows an alternative lightning receptor assembly. Here, the conductive band 12 is not inserted between receptor 10R and base 10B, but instead is held in place by a clamping plate 14. The clamping plate may be secured to the underside of the receptor 10R, for example by means of a cut-out that fits about the shaft of the threaded connector 11 as explained above. For replacement of the conductive band 12, the technician loosens the connector 11 between receptor 10R and base 10B at one end of the clamping plate 14 (or at both ends), thereby loosening the clamping plate 14. The technician then pulls out the conductive band 12 from underneath the loosened clamping plate 14, inserts a replacement conductive band 12 underneath the loosened clamping plate 14, and then tightens the threaded connector(s) 11. The advantage of this approach is that the conductive band 12 is less prone to fatigue from stress concentration in the press-fit realisations described in Figures 2 - 5 above. Optionally, the clamping plate 14 can be secured to the conductive band 12 by means of screws 140 as indicated here.

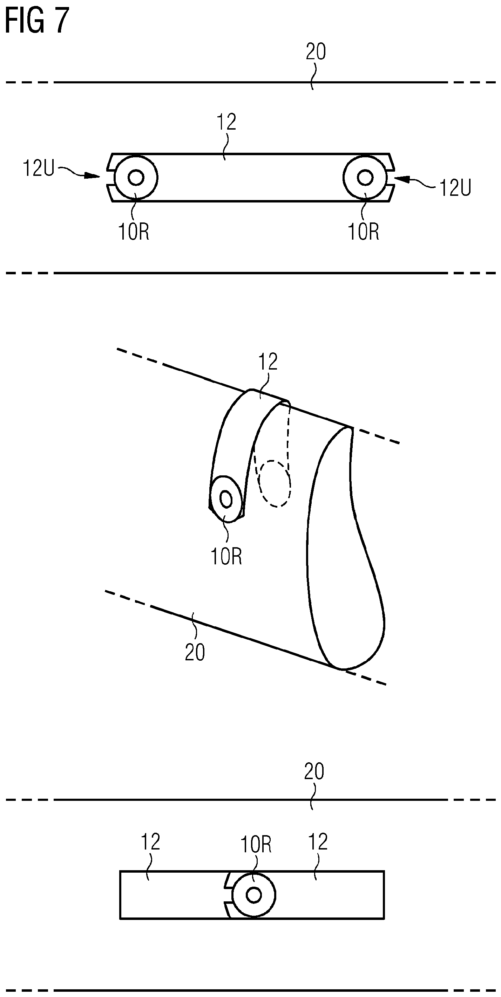

Figure 7 shows a number of possible configurations of the inventive lightning receptor assembly 1 for a wind turbine rotor blade 20. For clarity, only the receptors of the receptor units 10R, 10B are shown. At the top of the diagram, a conductive band 12 extends between two receptor units; in the centre of the diagram, a conductive band 12 extends from a receptor unit on the pressure side of the rotor blade 20 to a receptor unit on the suction side of the rotor blade 20; at the bottom, two conductive bands 12 extend outward from a receptor unit.

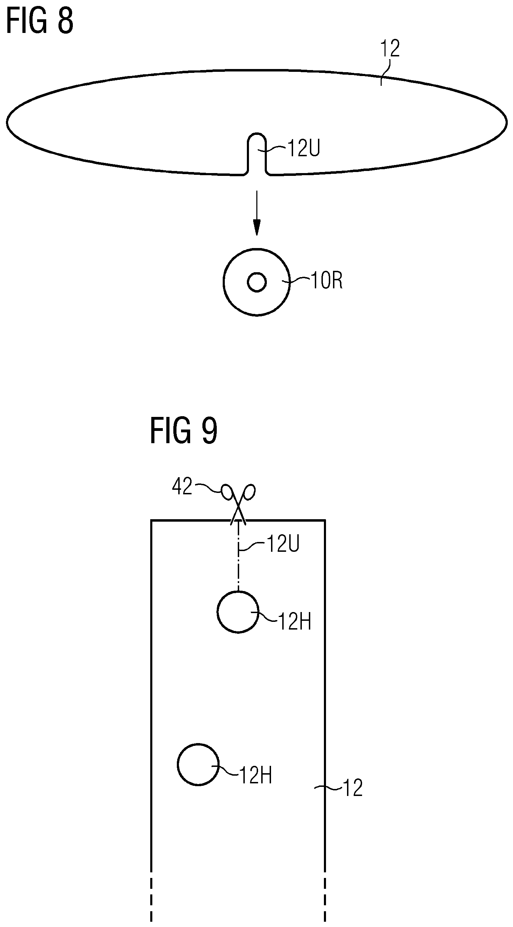

Figures 8 and 9 show further alternative forms for the conductive band 12 of an lightning receptor assembly according to the invention. In Figure 8, the conductive band 12 has an elongate oval form, and a cut-out is formed along one long edge. The conductive band can be pushed sideways between a receptor 10R and receptor base as indicated here.

Figure 9 shows a conductive band 12 with several round holes 12H punched at various positions. During a maintenance routine, a technician can identify the most appropriate hole and, using an appropriate cutting tool 42, can cut a slit from the edge of the conductive band 12 to the punched hole 12U in order to complete the cut-out 12U.

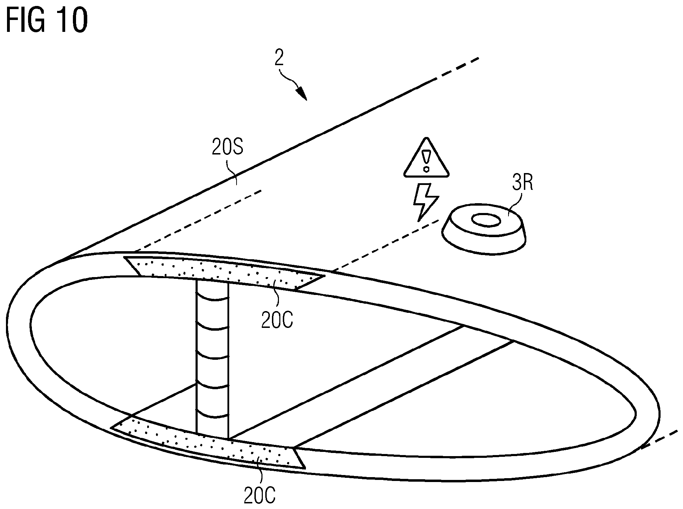

Figure 10 illustrates a prior art LPS configuration of a rotor blade. Here, the rotor blade 20 has been constructed to incorporate CFRP elements, in this case CFRP spar caps 20C on either side of a spar extending lengthwise through the rotor blade interior. The diagram indicates the position of a spar cap 20C under the "skin" of the rotor blade 20. During a lightning strike, electrical charge may collect in the region over the spar cap 20C, since CFRP is to some extent conductive. Instead of directly striking a receptor 3R, the lightning may be attracted towards the spar cap region instead. Equally, a direct strike to the receptor 3R may result in flashover to the CFRP spar cap 20C. Either way, the rotor blade may suffer severe damage leading to significant costs.

Although the present invention has been disclosed in the form of preferred embodiments and variations thereon, it will be understood that numerous additional modifications and variations could be made thereto without departing from the scope of the invention. For example, a conductive band can be slotted as appropriate to improve adhesion of a fibreglass cover layer. A conductive band could also be realised in a segmented manner, with two or more strips converging to form a region with a cut-out for engaging with the threaded connector between receptor and base.

For the sake of clarity, it is to be understood that the use of "a" or "an" throughout this application does not exclude a plurality, and "comprising" does not exclude other steps or elements.

## Claims

1. A wind turbine (2) comprising a number of rotor blades (20), and wherein a rotor blade (20) is equipped with a lightning receptor assembly (1) wherein the lightning receptor assembly (1) comprises
- a receptor unit (10R, 10B) comprising a receptor base (10B) for installation in the rotor blade interior (200) and a receptor (10R) for placement at an outer surface (20S) of the rotor blade (20);
- a threaded connector (11) to form a mechanical connection between the receptor (10R) and the receptor base (10B); and
- a conductive band (12) adapted to extend over the outer surface (20S) of the rotor blade (20), and the conductive band (12) being **characterized in that** it comprises a cut-out (12U) extending inwards from an edge of the conductive band (12) and shaped to laterally receive a shaft (11S) of the threaded connector (11) to form an electrical connection to the receptor unit (10R, 10B) without requiring removal of the receptor (10R) from the receptor base (10B).

2. A wind turbine according to the preceding claim, comprising the lightning receptor assembly, wherein the cut-out (12U) is shaped to fit about a shaft (11S) of the threaded connector (11) in place between the receptor (10R) and the receptor base (10B).

3. A wind turbine according to any of the preceding claims, comprising the lightning receptor assembly, wherein the inner end of the cut-out (12U) is formed to abut the threaded connector (11).

4. A wind turbine according to any of the preceding claims, comprising the lightning receptor assembly, wherein the cut-out (12U) is formed as an elongate slit in the body of the conductive band (12).

5. A wind turbine according to any of the preceding claims, comprising the lightning receptor assembly, wherein the cut-out (12U) is formed as an angled slit in the body of the conductive band (12).

6. A wind turbine according to any of the preceding claims, comprising the lightning receptor assembly, wherein the cut-out (12U) is formed at an outer end of the conductive band (12).

7. A wind turbine according to any of the preceding claims, comprising the lightning receptor assembly, wherein the cut-out (12U) is formed half-way along one long edge of the conductive band (12).

8. A wind turbine according to any of the preceding claims, comprising the lightning receptor assembly, wherein the conductive band (12) comprises any of: a metal band, a slotted metal band, a segmented metal band, a metal braid, a metal-coated or metal-woven carbon fibre band, a metal-coated or metal-woven glass fibre band.

9. A wind turbine according to any of the preceding claims, comprising the lightning receptor assembly, wherein the conductive band (12) has a cross-sectional area in the order of 50 mm².

10. A wind turbine according to claims 1-9, wherein a lightning receptor assembly (1) of a rotor blade (20) comprises two adjacent receptor units (10R, 10B) and wherein the conductive band (12) of that lightning receptor assembly (1) extends between those receptor units (10R, 10B).

11. A wind turbine according to claim 10, a lightning receptor assembly (1) of a rotor blade (20) comprises a first receptor unit (10R, 10B) on the pressure side and a second receptor unit (10R, 10B) on the suction side, and wherein the conductive band (12) of that lightning receptor assembly (1) extends between those receptor units (10R, 10B).

12. A method of preforming a maintenance procedure on a lightning receptor assembly (1) of a rotor blade (20) of a wind turbine (2) according to any of claims 1-11, which method comprises the steps of
- loosening the connector (11) of a receptor unit (10R, 10B);
- removing the conductive band (12) from under the receptor (10R) of that receptor unit (10R, 10B);
- inserting a replacement conductive band (12) under the receptor (10R) of that receptor unit (10R, 10B);
- tightening the connector (11) of the receptor unit (10R, 10B).

13. A method according to the preceding claim, comprising a step of forming a cut-out (12U) in the replacement conductive band (12) immediately prior to inserting the replacement conductive band (12) under the receptor (10R) of the receptor unit (10R, 10B).

14. A method according to any of the preceding method claims, comprising a preparatory step of attaching a temporary holding means (40, 41) to the replacement conductive band (12) prior to its insertion under the receptor unit (10R, 10B), and a final step of detaching the temporary holding means (40, 41) from the replacement conductive band (12).

## Patentansprüche

1. Windenergieanlage (2), eine Anzahl Rotorblätter (20) umfassend und wobei ein Rotorblatt (20) mit einer Blitzaufnehmeranordnung (1) ausgestattet ist, wobei die Blitzaufnehmeranordnung (1) Folgendes umfasst:
- eine Aufnehmereinheit (10R, 10B), die eine Aufnehmerbasis (10B) zum Installieren im Inneren (200) des Rotorblatts und einen Aufnehmer (10R) zum Platzieren an einer Außenfläche (20S) des Rotorblatts (20) umfasst,
- ein mit Gewinde versehenes Verbindungsstück (11), um eine mechanische Verbindung zwischen dem Aufnehmer (10R) und der Aufnehmerbasis (10B) zu bilden, und
- ein leitendes Band (12), das dafür eingerichtet ist, sich über die Außenfläche (20S) des Rotorblatts (20) zu erstrecken, und wobei das leitende Band (12) **dadurch gekennzeichnet ist, dass** es eine Aussparung (12U) umfasst, die sich von einem Rand des leitenden Bandes (12) einwärts erstreckt und derart geformt ist, dass sie einen Schaft (11S) des mit Gewinde versehenen Verbindungsstücks (11) quer aufnimmt, um eine elektrische Verbindung mit der Aufnehmereinheit (10R, 10B) zu bilden, ohne das Entfernen des Aufnehmers (10R) von der Aufnehmerbasis (10B) zu erfordern.

2. Windenergieanlage nach dem vorhergehenden Anspruch, die Blitzaufnehmeranordnung umfassend,
wobei die Aussparung (12U) derart geformt ist, dass sie um einen Schaft (11S) des mit Gewinde versehenen Verbindungsstücks (11) an einer Stelle zwischen dem Aufnehmer (10R) und der Aufnehmerbasis (10B) passt.

3. Windenergieanlage nach einem der vorhergehenden Ansprüche, die Blitzaufnehmeranordnung umfassend,
wobei das innere Ende der Aussparung (12U) derart gebildet ist, dass es an dem mit Gewinde versehenen Verbindungsstück (11) anliegt.

4. Windenergieanlage nach einem der vorhergehenden Ansprüche, die Blitzaufnehmeranordnung umfassend,
wobei die Aussparung (12U) als ein länglicher Schlitz in dem Körper des leitenden Bandes (12) gebildet ist.

5. Windenergieanlage nach einem der vorhergehenden Ansprüche, die Blitzaufnehmeranordnung umfassend,
wobei die Aussparung (12U) als ein winkliger Schlitz in dem Körper des leitenden Bandes (12) gebildet ist.

6. Windenergieanlage nach einem der vorhergehenden Ansprüche, die Blitzaufnehmeranordnung umfassend,
wobei die Aussparung (12U) an einem äußeren Ende des leitenden Bandes (12) gebildet ist.

7. Windenergieanlage nach einem der vorhergehenden Ansprüche, die Blitzaufnehmeranordnung umfassend,
wobei die Aussparung (12U) in der Mitte eines langen Randes des leitenden Bandes (12) gebildet ist.

8. Windenergieanlage nach einem der vorhergehenden Ansprüche, die Blitzaufnehmeranordnung umfassend,
wobei das leitenden Band (12) eines des Folgenden umfasst: ein Metallband, ein geschlitztes Metallband, ein segmentiertes Metallband, ein Metallgeflecht, ein metallbeschichtetes Kohlefaserband oder ein Kohlefaserband mit eingewebtem Metall, ein metallbeschichtetes Glasfaserband oder ein Glasfaserband mit eingewebtem Metall.

9. Windenergieanlage nach einem der vorhergehenden Ansprüche, die Blitzaufnehmeranordnung umfassend,
wobei das leitende Band (12) eine Querschnittsfläche in der Größenordnung von 50 mm² aufweist.

10. Windenergieanlage nach Anspruch 1 bis 9, wobei eine Blitzaufnehmeranordnung (1) eines Rotorblatts (20) zwei benachbarte Aufnehmereinheiten (10R, 10B) umfasst und wobei sich das leitenden Band (12) dieser Blitzaufnehmeranordnung (1) zwischen diesen Aufnehmereinheiten (10R, 10B) erstreckt.

11. Windenergieanlage nach Anspruch 10, wobei eine Blitzaufnehmeranordnung (1) eines Rotorblatts (20) eine erste Aufnehmereinheit (10R, 10B) an der Druckseite und eine zweite Aufnehmereinheit (10R, 10B) an der Saugseite umfasst und wobei sich das leitenden Band (12) dieser Blitzaufnehmeranordnung (1) zwischen diesen Aufnehmereinheiten (10R, 10B) erstreckt.

12. Verfahren zum Durchführen eines Wartungsvorgangs an einer Blitzaufnehmeranordnung (1) eines Rotorblatts (20) einer Windenergieanlage (2) nach einem der Ansprüche 1 bis 11, wobei das Verfahren die folgenden Schritte umfasst:
- Lösen des Verbindungsstücks (11) einer Aufnehmereinheit (10R, 10B);
- Entfernen des leitenden Bandes (12) von unterhalb des Aufnehmers (10R) dieser Aufnehmereinheit (10R, 10B);
- Einsetzen eines leitenden Ersatzbandes (12) unterhalb des Aufnehmers (10R) dieser Aufnehmereinheit (10R, 10B);
- Anziehen des Verbindungsstücks (11) der Aufnehmereinheit (10R, 10B).

13. Verfahren nach dem vorhergehenden Anspruch, einen Schritt des Bildens einer Aussparung (12U) in dem leitenden Ersatzband (12) unmittelbar vor dem Einsetzen des leitenden Ersatzbandes (12) unterhalb des Aufnehmers (10R) dieser Aufnehmereinheit (10R, 10B) umfassend.

14. Verfahren nach einem der vorhergehenden Verfahrensansprüche, einen vorbereitenden Schritt des Anbringens eines temporären Haltemittels (40, 41) an dem leitenden Ersatzband (12) vor dessen Einsetzen unterhalb der Aufnehmereinheit (10R, 10B) und einen abschließenden Schritt des Abnehmens des temporären Haltemittels (40, 41) von dem leitenden Ersatzband (12) umfassend.

## Revendications

1. Éolienne (2) comprenant plusieurs pales de rotor (20), et dans laquelle une pale de rotor (20) est équipée d'un ensemble récepteur de foudre (1) dans laquelle l'ensemble récepteur de foudre (1) comprend
- une unité réceptrice (10R, 10B) comprenant une base de récepteur (10B) pour une installation dans l'intérieur d'une pale de rotor (200) et un récepteur (10R) pour la mise en place au niveau d'une surface externe (20S) de la pale de rotor (20) ;
- un connecteur fileté (11) pour former un raccordement mécanique entre le récepteur (10R) et la base de récepteur (10B) ; et
- une bande conductrice (12) adaptée pour s'étendre sur la surface externe (20S) de la pale de rotor (20), et la bande conductrice (12) étant **caractérisée en ce qu'**elle comprend une découpe (12U) s'étendant vers l'intérieur depuis un bord de la bande conductrice (12) et mise en forme pour recevoir latéralement une tige (11S) du connecteur fileté (11) pour former une connexion électrique à l'unité réceptrice (10R, 10B) sans nécessité de retrait du récepteur (10R) de la base de récepteur (10B).

2. Éolienne selon la revendication précédente, comprenant l'ensemble récepteur de foudre,
dans laquelle la découpe (12U) est mise en forme pour s'ajuster autour d'une tige (11S) du connecteur fileté (11) en place entre le récepteur (10R) et la base de récepteur (10B).

3. Éolienne selon l'une quelconque des revendications précédentes, comprenant l'ensemble récepteur de foudre,
dans laquelle l'extrémité interne de la découpe (12U) est formée pour venir en butée contre le connecteur fileté (11).

4. Éolienne selon l'une quelconque des revendications précédentes, comprenant l'ensemble récepteur de foudre,
dans laquelle la découpe (12U) est formée en une fente allongée dans le corps de la bande conductrice (12).

5. Éolienne selon l'une quelconque des revendications précédentes, comprenant l'ensemble récepteur de foudre,
dans laquelle la découpe (12U) est formée en une fente angulaire dans le corps de la bande conductrice (12).

6. Éolienne selon l'une quelconque des revendications précédentes, comprenant l'ensemble récepteur de foudre,
dans laquelle la découpe (12U) est formée au niveau d'une extrémité externe de la bande conductrice (12).

7. Éolienne selon l'une quelconque des revendications précédentes, comprenant l'ensemble récepteur de foudre,
dans laquelle la découpe (12U) est formée à mi-chemin le long d'un bord long de la bande conductrice (12).

8. Éolienne selon l'une quelconque des revendications précédentes, comprenant l'ensemble récepteur de foudre,
dans laquelle la bande conductrice (12) comprend n'importe laquelle parmi : une bande métallique, une bande métallique fendue, une bande métallique segmentée, une tresse métallique, une bande de fibres de carbone revêtue de métal ou en métal tissé, une bande de fibres de verre revêtue de métal ou en métal tissé.

9. Éolienne selon l'une quelconque des revendications précédentes, comprenant l'ensemble récepteur de foudre,
dans laquelle la bande conductrice (12) présente une zone transversale dans l'ordre de 50 mm².

10. Éolienne selon les revendications 1 à 9,
dans laquelle un ensemble récepteur de foudre (1) d'une pale de rotor (20) comprend deux unités réceptrices (10R, 10B) adjacentes et dans laquelle la bande conductrice (12) de cet ensemble récepteur de foudre (1) s'étend entre ces unités réceptrices (10R, 10B).

11. Éolienne selon la revendication 10, dans laquelle un ensemble récepteur de foudre (1) d'une pale de rotor (20) comprend une première unité réceptrice (10R, 10B) sur le côté pression et une seconde unité réceptrice (10R, 10B) sur le côté aspiration, et dans laquelle la bande conductrice (12) de cet ensemble récepteur de foudre (1) s'étend entre ces unités réceptrices (10R, 10B).

12. Procédé de préformation d'une procédure d'entretien sur un ensemble récepteur de foudre (1) d'une pale de rotor (20) d'une éolienne (2) selon l'une quelconque des revendications 1 à 11, lequel procédé comprend les étapes consistant à
- libérer le connecteur (11) d'une unité réceptrice (10R, 10B) ;
- retirer la bande conductrice (12) du dessous du récepteur (10R) de cette unité réceptrice (10R, 10B) ;
- insérer une bande conductrice (12) de remplacement sous le récepteur (10R) de cette unité réceptrice (10R, 10B) ;
- serrer le connecteur (11) de l'unité réceptrice (10R, 10B).

13. Procédé selon la revendication précédente, comprenant une étape de formation d'une découpe (12U) dans la bande conductrice (12) de remplacement immédiatement avant d'insérer la bande conductrice (12) de remplacement sous le récepteur (10R) de l'unité réceptrice (10R, 10B).

14. Procédé selon l'une quelconque des revendications de procédé précédentes, comprenant une étape préparatoire de fixation d'un moyen de retenue temporaire (40, 41) à la bande conductrice (12) de remplacement, avant son insertion sous l'unité réceptrice (10R, 10B), et une étape finale de détachement du moyen de retenue temporaire (40, 41) de la bande conductrice (12) de remplacement.
